# EUROPÄISCHE PATENTSCHRIFT

(11) **EP 2 948 327 B1**
(45) Veröffentlichungstag und Bekanntmachung des Hinweises auf die Patenterteilung: **29.04.2020**
(21) Anmeldenummer: 13818979.0
(22) Anmeldetag: 11.12.2013
(51) Int. Cl.: B60J 5/04

(54) **ZWISCHENSCHALE FÜR EINE KRAFTFAHRZEUGTÜR, VERFAHREN ZUR HERSTELLUNG ZWISCHENSCHALE UND TÜR FÜR EIN KRAFTFAHRZEUG**
INTERMEDIATE SHELL FOR A MOTOR VEHICLE DOOR, METHOD FOR PRODUCING AN INTERMEDIATE SHELL, AND A DOOR FOR A MOTOR VEHICLE
STRUCTURE INTERMÉDIAIRE POUR PORTE DE VÉHICULE AUTOMOBILE, PROCÉDÉ DE PRODUCTION D'UNE STRUCTURE INTERMÉDIAIRE ET PORTE POUR VÉHICULE AUTOMOBILE

(30) Priorität: 23.01.2013 DE 102013001028
(43) Veröffentlichungstag der Anmeldung: 02.12.2015
(73) Patentinhaber: Daimler AG, 70372 Stuttgart (DE)
(72) Erfinder: BENDIKS, Michael, 73207 Plochingen (DE); BÖSSELMANN, Jürgen, 72585 Riederich (DE)
(74) Vertreter: JENSEN & SON
(86) Internationale Anmeldenummer: PCT/EP2013/003747
(87) Internationale Veröffentlichungsnummer: WO 2014/114314

(56) Entgegenhaltungen:
- EP-A1- 0 776 778
- EP-A2- 0 997 331
- DE-A1-102005 031 729
- DE-A1-102007 061 209
- JP-A- 2001 341 529

## Beschreibung

Die Erfindung betrifft eine Zwischenschale für eine Kraftfahrzeugtür gemäß Oberbegriff des Anspruchs 1, ein Verfahren zur Herstellung einer Zwischenschale für eine Kraftfahrzeugtür gemäß Oberbegriff des Anspruchs 3.

Zwischenschalen, Verfahren zu deren Herstellung und Türen der hier angesprochenen Art sind bekannt. Eine entsprechende Tür für ein Kraftfahrzeug, insbesondere für einen Personenkraftwagen, die typischerweise als Seitentür ausgebildet ist, weist eine Zwischenschale auf, an der auf einer ersten Seite eine Außenbeplankung und auf einer zweiten, der ersten Seite - in Querrichtung des Kraftfahrzeugs in montiertem Zustand der Tür an dem Kraftfahrzeug gesehen - gegenüberliegenden Seite eine Innenschale angeordnet ist. Dabei dient die Innenschale typischerweise der Anordnung von Innenraumapplikationen, beziehungsweise es sind Innenraumapplikationen an der Innenschale vorgesehen oder ausgebildet. Die Zwischenschale ist in der Regel metallisch ausgebildet. Aus der deutschen Offenlegungsschrift DE 10 2007 061 209 A1 geht eine Seitentür für einen Kraftwagen mit einer solchen, dort als Türinnenteil bezeichneten Zwischenschale hervor, wobei die Zwischenschale als Rahmenteil aus einem Gusswerkstoff gebildet ist. Alternativ ist es möglich, die Zwischenschale entweder einstückig als Blechpressteil oder aus mehreren Einzelbauteilen, die entweder als Blechteile oder als Gussteile ausgebildet sind, als Zusammenbau herzustellen. Um insbesondere für eine Unfallsituation vorgesehene Festigkeitsanforderungen erfüllen zu können, wird bei all diesen Varianten entweder eine Wandstärke durchgängig über die gesamte Zwischenschale erhöht, oder es werden Zusatzbauteile angefügt, welche als Türverstärkung wirken. Beides ist nachteilig, weil sowohl die durchgängig erhöhte Wandstärke als auch die zusätzlichen Verstärkungsteile ein relativ hohes Gewicht der Zwischenschale und damit auch der gesamten Tür zur Folge haben. Hinzu kommt, dass eine Herstellung aus mehreren Einzelbauteilen eine Vielzahl von Fügeoperationen bedingt, was aufwändig ist. Insbesondere bei einer Herstellung in Mischbauweise sind komplizierte Fügeverfahren notwendig, um materialverschiedene Bauteile miteinander fügen zu können. Sowohl bei Guss- als auch bei Blechbauteilen sind außerdem aufwändige Nacharbeiten nötig.

Die europäische Offenlegungsschrift EP 0 997 331 A2 offenbart eine Fahrzeugtür, wobei die Fahrzeugtür aus einem unteren Türkasten und einem auf diesen aufgesetzten oberen Rahmenteil besteht. Um eine Fahrzeugtür von gutem Aussehen aus Leichtmetall zu schaffen, die eine große Stabilität aufweist und sich mit wenig Ausschluss fertigen lässt, besteht der Türkasten aus einem gebogenen Strangpressprofil aus Aluminium und aus mit diesen verbundenen Pressteilen aus Aluminium, die die Außen- und Innenbleche bilden.

Die deutsche Offenlegungsschrift DE 10 2005 031 729 A1 offenbart eine Fahrzeugtür für ein Fahrzeug, welche ein Türinnenteil und ein Türaußenteil aufweist, wobei das Türinnenteil als Blechteil und das Türaußenteil als Profilteil ausgebildet sind und das Türinnenteil und das Türaußenteil im Bereich eines Fensterrahmens eines Fahrzeugtürfensters mechanisch miteinander verbunden sind, wobei das Türinnenteil vollständig umlaufend um den Randbereich der Fahrzeugtür angeordnet ist und eine im Querschnitt wesentliche L-förmige Formgebung aufweist.

Die japanische Offenlegungsschrift JP 2001 341 529 A offenbart eine Türstruktur, wobei diese Türstruktur für ein Fahrzeug einen Türflügel am oberen Teil eines Türkörpers 2 hat. Der Türkörper 2 ist mit einem inneren Türfrontelement 4 versehen, das die Vorderkante des Türkörpers 2 bildet und einstückig von einem unteren Randschwellenteil des Türkörpers 2 zu einem oberen Kantenteilabschnitt des Türkörpers 2 und weiter zu einem Rückspiegelbefestigungsteil 14 mit dreieckiger Form oberhalb des Kantenteilabschnitt bildet.

Die europäische Offenlegungsschrift EP 0 776 778 A1 offenbart eine Konstruktionsmetallelementöffnung einer Fahrzeugkarosserie, insbesondere einer Tür, wobei es eine allgemeine Form eines Ringes aufweist und zumindest teilweise in einer Gießerei, insbesondere mit einer Aluminiumlegierung, hergestellt ist.

Der Erfindung liegt die Aufgabe zugrunde, eine Zwischenschale für eine Kraftfahrzeugtür, ein Verfahren zu deren Herstellung und eine Tür für ein Kraftfahrzeug zu schaffen, wobei eine hohe Festigkeit, insbesondere Unfallstabilität, ohne großen Aufwand und Nacharbeiten möglich ist, und wobei zugleich dem Leichtbaugedanken Rechnung getragen wird.

Die Aufgabe wird gelöst, in dem eine Zwischenschale mit dem Merkmal des Anspruchs 1 geschaffen wird. Diese bevorzugt für eine Seitentür eines Kraftfahrzeugs vorgesehene Zwischenschale zeichnet sich dadurch aus, dass sie zumindest bereichsweise aus einem Leichtmetall-Rohling durch Massivumformen, vorzugsweise durch Schmieden hergestellt ist. Massivumgeformte Teile, insbesondere Schmiedebauteile, weisen gegenüber Guss- oder Blechbauteilen eine erhöhte mechanische Belastbarkeit auf. Dies liegt wesentlich daran, dass beim Massivumformen, insbesondere beim Schmieden, ein Faserverlauf in dem Bauteil geeignet gestaltet beziehungsweise beeinflusst werden kann. Insbesondere ist es möglich, Fasern in bestimmten Bereichen zu sammeln, sodass in diesen Bereichen eine besonders hohe mechanische Belastbarkeit resultiert. Es ist damit möglich, die mechanische Belastbarkeit bedarfsgerecht lokal in der Zwischenschale einzustellen. Dabei ist es insbesondere auch möglich, eine Wandstärke beziehungsweise einen Querschnitt der Zwischenschale beim Massivumformen, insbesondere beim Schmieden, diskontinuierlich und lokal bedarfsgerecht zu wählen, wobei mechanisch höher belastete Bereiche mit größerer Wandstärke ausgebildet werden können als mechanisch geringer belastete Bereiche. Zugleich können die Fasern in den mechanisch höher belasteten Bereichen gesammelt werden, sodass diese besonders hoch belastabar sind.

Es zeigt sich, dass massivumgeformte, insbesondere geschmiedete Bauteile gerade in Bereichen, die eine größere Wandstärke aufweisen, gegenüber Gussbauteilen vorteilhaft sind, weil keine Gefahr eines Lunkereinschlusses existiert, wobei diese Gefahr bei Gussbauteilen mit steigender Wandstärke steigt. Im Gegensatz dazu umfassen massivumgeformte, vorzugsweise geschmiedete Bauteile ein sehr homogenes, hochverdichtetes Gefüge, welches eine hohe Festigkeit und Duktilität aufweist. Aufgrund dieser Eigenschaften ist es insgesamt möglich, die Wandstärke der massivumgeformten, vorzugsweise geschmiedeten Zwischenschale im Vergleich zur Blechbauweise oder zur Herstellung als Gussbauteil zu reduzieren, sodass dem Leichtbaugedanken Rechnung getragen wird.

Gerade durch die Möglichkeit, die Zwischenschale belastungsgerecht maßzuschneidern und ihre mechanische Belastbarkeit und Wandstärke lokal differenziert einzustellen, können sehr große Gewichtseinsparungen realisiert werden. Die lokal und auch insgesamt mögliche, schlankere Auslegung der Zwischenschale schafft außerdem Bauraum. Darüber hinaus ergibt sich bei einer zumindest bereichsweise massivumgeformten, vorzugsweise geschmiedeten Zwischenschale im Vergleich zu einer Herstellung als Blech- oder Gussteil ein verringerter Nachbearbeitungsaufwand.

Bisherige, insbesondere konventionelle Fügeverfahren können ohne Weiteres weiterhin verwendet werden. Durch das Massivumformen, vorzugsweise Schmieden ergeben sich insbesondere eine verbesserte Zugfestigkeit, Dehngrenze und Bruchdehnung sowie Duktilität. Zumindest in Hinblick auf den massivumgeformten, vorzugsweise geschmiedeten Bereich der Zwischenschale bedarf es keines Gusswerkzeugs, keiner speziellen Fügevorrichtungen und nur geringer Nacharbeiten. Es ist außerdem eine Funktionsintegration beim Massivumformen, insbesondere Schmieden möglich. Insgesamt ergeben sich so Gewichts- und Kostenpotentiale. Des Weiteren ist eine optimale Auslegung des massivumgeformten, vorzugsweise geschmiedeten Bauteils auf ein Verhalten bei einem Unfall möglich.

Erfindungsgemäß ist die Zwischenschale aus einer Mehrzahl von geschmiedeten Bauteilen gefertigt. Zumindest ein Bauteil ist aus einem Leichtmetall-Rohling durch Massivumformen, vorzugsweise durch Schmieden hergestellt. Die Bauteile sind miteinander durch Schweißen gefügt. Alle verwendeten Bauteile sind geschmiedet, insbesondere vorzugsweise aus einem gleichen Material. In diesem Fall ergeben sich keinerlei Probleme in der Fertigung, insbesondere keine problematischen Fügeverbindungen. Insbesondere können mechanische Schwachstellen an Schweißnähten vermieden werden.

Alternativ wird eine nicht zur Erfindung gehörende Zwischenschale beschrieben, die einstückig als massivumgeformtes, vorzugsweise geschmiedetes Bauteil aus einem Leichtmetall-Rohling hergestellt ist. Hierbei wirken sich in besonders ausgeprägter Weise die Vorteile der Herstellung durch Massivumformen, vorzugsweise Schmieden, auf die gesamte Zwischenschale aus. Zugleich ergibt sich eine sehr hohe Genauigkeit durch die einstückige Herstellung, weil eine Toleranzkette über verschiedene Bauteile entfällt. Weiterhin entfallen ansonsten notwendige Fügeoperationen, was Kosten spart und auch logistisch vorteilhaft ist. Besonders bevorzugt umfasst die einstückig hergestellte Zwischenschale einen gesamten Türrahmen vorzugsweise mit einem Fensterrahmen. Alternativ oder zusätzlich ist es möglich, dass sie auch eine Bordkante umfasst.

Es wird auch eine Zwischenschale bevorzugt, die sich dadurch auszeichnet, dass sie ein Leichtmetall oder eine Leichtmetalllegierung umfasst, vorzugsweise aus einem Leichtmetall oder einer Leichtmetalllegierung besteht. Besonders bevorzugt umfasst sie ein Material oder besteht aus einem Material, welches ausgewählt ist aus einer Gruppe bestehend aus Aluminium, Magnesium, einer Aluminiumlegierung und einer Magnesiumlegierung. Besonders bevorzugt umfasst die Zwischenschale eine AlMgSi-Legierung oder besteht aus dieser, wobei diese besonders bevorzugt als Knetlegierung aus der Serie 6000 beziehungsweise 6xxx ausgebildet ist. Bevorzugt ist die Zwischenschale zumindest bereichsweise aus einem Leichtmetall-Rohling hergestellt, der mindestens eines der hier genannten Materialien umfasst, vorzugsweise aus diesem besteht.

Erfindungsgemäß ist mindestens ein Verstärkungselement und/oder mindestens ein Anbindungselement zur Anbindung weiterer Bauteile einer Kraftfahrzeug-Rohbaustruktur an der Zwischenschale ausgeschmiedet, vorzugsweise an diese angeschmiedet und/oder in sie eingeschmiedet. Dabei spricht der Begriff "ausgeschmiedet" an, dass das mindestens eine Verstärkungs- und/oder Anbindungselement beim Schmieden einstückig aus dem umgeformten Material herausgebildet beziehungsweise ausgeformt ist. Der Begriff "angeschmiedet" spricht an, dass das Verstärkungs- und/oder Anbindungselement zunächst separat von dem beim Schmieden umgeformten Material vorgesehen, jedoch während des Schmiedeverfahrens durch Schmieden mit diesem verbunden beziehungsweise gefügt wird. Dabei wird es bevorzugst bereichsweise mit dem Material umschmiedet. Vorzugsweise weist das mindestens eine Verstärkungs- und/oder Anbindungselement hierzu mindestens eine Öffnung auf, durch die im Schmiedeprozess das Material des Leichtmetall-Rohlings hindurch treten kann, wobei es sich mit dem restlichen, insbesondere - in Richtung der Öffnung gesehen - gegenüberliegenden Leichtmetallmaterial stoffschlüssig verbindet. Hierdurch wird eine besonders feste, form- und kraftschlüssige Verbindung des Materials des Leichtmetall-Rohlings mit dem mindestens einen Verstärkungs- und/oder Anbindungselement bewirkt. Der Begriff "eingeschmiedet" spricht insbesondere in Hinblick auf ein Verstärkungselement an, dass dieses vollständig mit dem Material des Leichtmetall-Rohlings umschmiedet wird. Nach dem Schmiedeprozess ist in diesem Fall das Verstärkungselement vollständig innerhalb des geschmiedeten Bauteiles angeordnet.

Das mindestens eine Verstärkungselement ist vorzugsweise als Verstärkungsteil für ein Türschloss, ein Türscharnier und/oder eine Konsole für einen Seitenaufprallschutz, insbesondere eine Seitenaufprallstrebe ausgebildet. Das mindestens eine Anbindungselement ist vorzugsweise als Flansch, Konsole, Kraftfluss- oder Anschraubpunkt, insbesondere zur Herstellung einer Fügeverbindung mit angrenzenden Elementen der Kraftfahrzeug-Rohbaustruktur ausgebildet. Insbesondere wenn ein solches Anbindungselement einstückig mit dem massivumgeformten, vorzugsweise geschmiedeten Bereich der Zwischenschale oder auch mit der einstückig massivumgeformten beziehungsweise geschmiedeten Zwischenschale ausgebildet ist, ergibt sich eine Funktionsintegration, was Gewichts- und Kostenvorteile sowie eine erhöhte Festigkeit zur Folge hat. Außerdem ist es möglich, Herstellungsschritte, insbesondere Fügeschritte, einzusparen.

Die Aufgabe wird auch gelöst, in dem ein Verfahren zur Herstellung einer Zwischenschale für eine Kraftfahrzeugtür mit den Merkmalen des Anspruchs 3 geschaffen wird. Das Verfahren dient der Herstellung einer Zwischenschale gemäß einem der zuvor beschriebenen Ausführungsbeispiele, insbesondere einer Zwischenschale für eine Seitentür eines Kraftfahrzeugs. Das Verfahren zeichnet sich dadurch aus, dass die Zwischenschale zumindest bereichsweise aus einem Leichtmetall-Rohling durch Schmieden hergestellt wird. Dabei ergeben sich die Vorteile, die bereits in Zusammenhang mit der Zwischenschale ausgeführt wurden.

Vorteilhaft an einer Herstellung der Zwischenschale zumindest bereichsweise durch Massivumformen, vorzugsweise durch Schmieden, ist auch, dass sich durch eine Kaltverfestigung des verwendeten Leichtmetallmaterials eine Festigkeits- und Duktilitätserhöhung ergibt. Insgesamt wird so ein duktiles Leichtbauteil mit hoher Festigkeit und Duktilität hergestellt.

Vorzugsweise wird die Zwischenschale zumindest bereichsweise durch Halbwarmschmieden hergestellt. Dies spricht an, dass die Arbeitstemperatur bei der Umformung vorzugsweise unterhalb einer Rekristallisationstemperatur des bearbeiteten Materials liegt. Ein Vorteil ist hierbei, dass kein oder nur ein geringes Verzundern an einer Oberfläche des Materials stattfindet. Es sind vergleichsweise enge Maßtoleranzen darstellbar. Alternativ wird bevorzugt, dass die Zwischenschale zumindest bereichsweise durch Warmschmieden hergestellt ist. Dies spricht an, dass die Arbeitstemperatur bei der Umformung vorzugsweise oberhalb einer Rekristallisationstemperatur des Materials liegt. Vorteilhaft hierbei ist, dass vergleichsweise geringe Umformkräfte erforderlich sind.

Vorzugsweise wird im Anschluss an das Massivumformen, insbesondere im Anschluss an das Schmieden, eine Wärmebehandlung durchgeführt, wobei die Bauteileigenschaften über den Wärmebehandlungsprozess optimal und bedarfsgerecht eingestellt werden können.

Es wird ein nicht zur Erfindung gehörendes Verfahren beschrieben, bei dem die Zwischenschale einstückig als massivumgeformtes, vorzugsweise geschmiedetes Bauteil hergestellt wird. Dabei wird sie bevorzugt als gesamter Türrahmen vorzugsweise einschließlich eines Fensterrahmens und/oder einer Bordkante hergestellt. Dies ist besonders vorteilhaft, weil Fügeoperationen und Herstellungsschritte entfallen, beziehungsweise weil besonders geringe Toleranzen darstellbar sind, weil eine Toleranzkette aufgrund des Fügens verschiedener Elemente entfällt.

Erfindungsgemäß ist die Zwischenschale aus einer Mehrzahl von geschmiedeten Bauteilen gefügt. Dabei wird zumindest ein Bauteil aus einem Leichtmetall-Rohling durch Schmieden hergestellt. Besonders bevorzugt werden alle Bauteile aus einem Leichtmetall-Rohling durch Massivumformen, vorzugsweise durch Schmieden hergestellt. Die Bauteile werden durch Schweißen miteinander gefügt.

Es wird auch ein Verfahren bevorzugt, das sich dadurch auszeichnet, dass ein Leichtmetall-Rohling verwendet wird, der ein Leichtmetall oder eine Leichtmetall-Legierung umfasst, vorzugsweise aus einem Leichtmetall oder einer Leichtmetall-Legierung besteht. Bevorzugt wird ein Material verwendet, das ausgewählt ist aus einer Gruppe bestehend aus Aluminium, einer Aluminium-Legierung, Magnesium, einer Magnesium-Legierung und einer AlMgSi-Legierung. Besonders bevorzugt wird eine Knetlegierung aus der Serie 6000 beziehungsweise 6xxx verwendet.

Es wird auch ein Verfahren bevorzugt, das sich dadurch auszeichnet, dass mindestens ein Verstärkungselement und/oder mindestens ein Anbindungselement zur Anbindung weiterer Bauteile einer Kraftfahrzeug-Rohbaustruktur an der Zwischenschale ausgeschmiedet, an sie angeschmiedet und/oder in diese eingeschmiedet wird/werden. Dabei spricht der Begriff "Ausschmieden" an, dass das mindestens eine Verstärkungs- und/oder Anbindungselement beim Schmieden aus dem umgeformten Material geformt wird. Der Begriff "Anschmieden" spricht an, dass das mindestens eine Verstärkungs- und/oder Anbindungselement zunächst separat von dem beim Schmieden umgeformten Material vorgesehen ist, wobei es während des Schmiedens und durch das Schmieden mit dem umgeformten Material gefügt, insbesondere bereichsweise mit diesem Material umschmiedet wird. Dabei ist bevorzugt an dem mindestens einen Verstärkungs- und/oder Anbindungselement mindestens eine Öffnung vorgesehen, durch welche im Schmiedeprozess das umgeformte Leichtmetallmaterial hindurch tritt, so dass es sich auf einer der Öffnung gegenüberliegenden Seite mit dem dort angeordneten Leichtmetallmaterial stoffschlüssig verbindet. Hierdurch ist eine form- und kraftschlüssige, besonders feste Verbindung des Leichtmetallmaterials mit dem mindestens einen Verstärkungs- und/oder Anbindungselement bewirkbar. Vorzugsweise werden auf eine der beschriebenen Weisen Verstärkungsteile für ein Türschloss, ein Türscharnier und/oder eine Konsole für einen Seitenaufprallschutz, insbesondere eine Seitenaufprallstrebe, an der Zwischenschale vorgesehen.

Es werden insbesondere Ausführungsformen des Verfahrens bevorzugt, die sich durch mindestens einen Verfahrensschritt auszeichnen, der durch mindestens ein in Zusammenhang mit der Zwischenschale beschriebenes Vorrichtungsmerkmal, vorzugsweise Kombinationen hiervon, bedingt beziehungsweise zu dessen Realisierung vorgesehen ist. Umgekehrt werden Ausführungsbeispiele der Zwischenschale bevorzugt, welche mindestens ein Merkmal aufweisen, das aus mindestens einem im Rahmen des Verfahrens offenbarten Verfahrensschritt, vorzugsweise Kombinationen hiervon, resultiert beziehungsweise hierdurch bedingt ist. Insofern sind die Beschreibung der Zwischenschale und die Beschreibung des Verfahrens als komplementär zueinander zu verstehen.

Es wird eine nicht zur Erfindung gehörende Tür für ein Kraftfahrzeug beschrieben. Die Tür ist insbesondere als Tür eines Personenkraftwagens, bevorzugt als Seitentür ausgebildet. Sie weist eine Zwischenschale auf, an der auf einer ersten Seite eine Außenbeplankung und auf einer zweiten, der ersten Seite - in Querrichtung gesehen - gegenüberliegenden Seite eine Innenschale angeordnet ist, die vorzugsweise Innenraumapplikationen aufweist oder zur Anordnung von Innenraumapplikationen vorgesehen ist. Dabei spricht die Querrichtung bevorzugt zum einen eine Querrichtung der Tür selbst und zum anderen eine Querrichtung eines Kraftfahrzeugs an, an dem die Tür bestimmungsgemäß montiert ist. In bestimmungsgemäß montiertem Zustand der Tür an dem Kraftfahrzeug sind deren Querrichtungen parallel zueinander ausgerichtet. Die Zwischenschale bildet vorzugsweise quasi einen Träger für die Außenbeplankung einerseits und für die Innenschale andererseits. Die Tür zeichnet sich dadurch aus, dass die Zwischenschale zumindest bereichsweise aus einem Leichtmetall-Rohling durch Massivumformen, vorzugsweise durch Schmieden hergestellt ist. Besonders bevorzugt ist die Zwischenschale als Zwischenschale nach einem der zuvor beschriebenen Ausführungsbeispiele ausgebildet und/oder nach einer der zuvor beschriebenen Ausführungsformen des Verfahrens hergestellt.

Damit verwirklichen sich in Zusammenhang mit der Tür die gleichen Vorteile, die bereits in Zusammenhang mit der Zwischenschale und dem Verfahren beschrieben wurden.

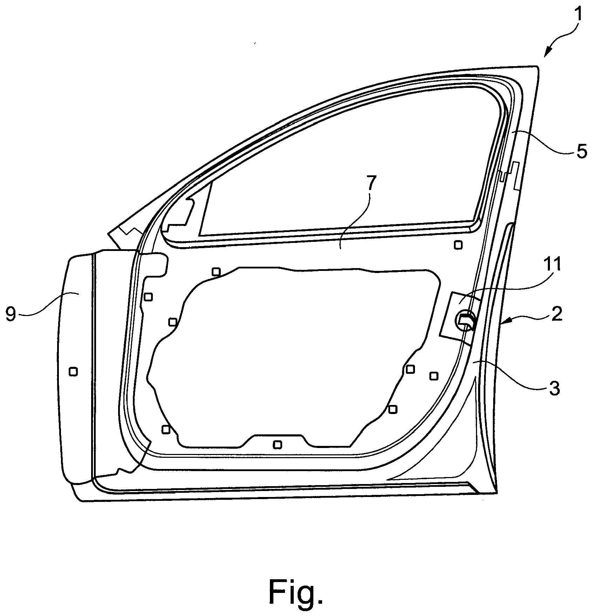

Die Erfindung wird im Folgenden anhand der Zeichnung näher beschrieben. Dabei zeigt die einzige Figur eine schematische Ansicht eines Ausführungsbeispiels einer Zwischenschale für eine Kraftfahrzeugtür.

Die einzige Figur zeigt eine Darstellung eines Ausführungsbeispiels einer Zwischenschale 1 für eine Kraftfahrzeugtür, wobei die Zwischenschale 1 für die Seitentür eines Personenkraftwagens ausgebildet ist.

Die Zwischenschale 1 umfasst einen Türrahmen 2 beziehungsweise ein unteres Rahmenteil 3, einen Fensterrahmen 5 sowie eine Bordkante 7.

Bevorzugt ist die Zwischenschale 1 einstückig aus einem Leichtmetall-Rohling geschmiedet, wobei das untere Rahmenteil 3, der Fensterrahmen 5 und die Bordkante 7 beim Schmieden aus dem Leichtmetall-Rohling ausgeformt werden. Dabei wird die Zwischenschale 1 besonders bevorzugt durch Gesenkschmieden, insbesondere durch Umformen des Leichtmetall-Rohlings zwischen einem Ober- und einem Untergesenk hergestellt.

An die Zwischenschale 1 sind bevorzugt eine Scharnierverstärkung 9 und eine Schlossverstärkung 11 angeschmiedet, wobei diese vorzugsweise bereichsweise mit dem Material der Zwischenschale 1 umschmiedet sind.

Alternativ ist es möglich, dass die Scharnierverstärkung 9 und die Schlossverstärkung 11 einstückig an der Zwischenschale 1 ausgeschmiedet werden.

Insgesamt zweigt sich, dass mittels des Verfahrens eine Zwischenschale 1 herstellbar ist, die verbesserte Bauteileigenschaften in Hinblick auf ihre Zugfestigkeit, Dehngrenze, Bruchdehnung und Duktilität aufweist, wobei zugleich Leichtbau betrieben werden kann. Damit ist es möglich, eine besonders leichte und zugleich stabile Tür für ein Kraftfahrzeug ohne großen Aufwand und ohne umgangreiche Nacharbeiten herzustellen.

## Patentansprüche

1. Zwischenschale (1) für eine Kraftfahrzeugtür, insbesondere eine Seitentür eines Kraftfahrzeugs, wobei es sich um eine geschmiedete Zwischenschale (1) aus Leichtmetall handelt, wobei mindestens ein Verstärkungselement und/oder mindestens ein Anbindungselement zur Anbindung weiterer Bauteile einer Kraftfahrzeug-Rohbaustruktur an der Zwischenschale (1) ausgeschmiedet ist/sind, wobei die Zwischenschale (1) aus einer Mehrzahl von geschmiedeten Bauteilen gefertigt ist, **dadurch gekennzeichnet, dass** die Bauteile durch Schweißen miteinander gefügt sind.

2. Zwischenschale (1) nach Anspruch 1, **dadurch gekennzeichnet, dass** die Zwischenschale (1) ein Leichtmetall oder eine Leichtmetall-Legierung, insbesondere Aluminium, Magnesium, oder eine Aluminium- oder Magnesiumlegierung, besonders bevorzugt eine AlMgSi-Legierung umfasst, vorzugsweise aus einem der genannten Materialien besteht.

3. Verfahren zur Herstellung einer Zwischenschale (1) nach einem der Ansprüche 1 bis 2, für eine Kraftfahrzeugtür, insbesondere für eine Seitentür eines Kraftfahrzeugs, **dadurch gekennzeichnet, dass** die Zwischenschale zumindest bereichsweise aus einem Leichtmetall-Rohling durch Schmieden hergestellt wird, wobei die Zwischenschale (1) aus einer Mehrzahl von geschmiedeten Bauteilen gefügt ist, wobei zumindest ein Bauteil aus einem Leichtmetall-Rohling durch Schmieden hergestellt ist, wobei die Bauteile durch Schweißen miteinander gefügt sind.

4. Verfahren nach Anspruch 3, **dadurch gekennzeichnet, dass** ein Leichtmetall-Rohling verwendet wird, der ein Leichtmetall oder eine Leichtmetall-Legierung, insbesondere Aluminium oder eine Aluminiumlegierung, Magnesium oder eine Magnesiumlegierung, besonders bevorzugt eine AlMgSi-Legierung umfasst, vorzugsweise aus einem der genannten Materialien besteht.

5. Verfahren nach einem der Ansprüche 3 bis 4, **dadurch gekennzeichnet, dass** mindestens ein Verstärkungselement und/oder mindestens ein Anbindungselement zur Anbindung weiterer Bauteile einer Kraftfahrzeug-Rohbaustruktur an der Zwischenschale (1) ausgeschmiedet, an die Zwischenschale (1) angeschmiedet und/oder in diese eingeschmiedet wird/werden.

## Claims

1. Intermediate shell (1) for a motor vehicle door, in particular a side door of a motor vehicle, the shell being a forged intermediate shell (1) of light metal, wherein at least one reinforcement element and/or at least one connecting element for connecting further components of a motor vehicle frame structure to the intermediate shell (1) is/are forged, wherein intermediate shell (1) is produced from a plurality of forged components, **characterised in that** the components are joined to one another by welding.

2. Intermediate shell (1) according to claim 1, **characterised in that** the intermediate shell (1) comprises a light metal or a light metal alloy, in particular aluminium or magnesium or an aluminium or magnesium alloy, particularly preferably an AIMgSi alloy, preferably consisting of one of the said materials.

3. Method for producing an intermediate shell (1) according to any of claims 1 to 2 for a motor vehicle door, in particular a side door of a motor vehicle, **characterised in that** at least parts of the intermediate shell are produced by forging from a light metal blank, wherein the intermediate shell (1) is made from a plurality of forged components, wherein at least one component is produced by forging from a light metal blank, wherein the components are joined to one another by welding.

4. Method according to claim 3, **characterised in that** a light metal blank comprising a light metal or a light metal alloy, in particular aluminium or an aluminium alloy, magnesium or a magnesium alloy, particularly preferably an AIMgSi alloy, preferably consisting of one of the said materials, is used.

5. Method according to any of claims 3 to 4, **characterised in that** at least one reinforcement element and/or at least one connecting element for connecting further components of a motor vehicle frame structure to the intermediate shell (1) is/are forged to and/or into the intermediate shell (1).

## Revendications

1. Structure intermédiaire (1) pour une porte de véhicule à moteur, en particulier pour une porte latérale d'un véhicule à moteur, ladite structure intermédiaire forgée (1) étant constituée de métal léger au moins un élément de renfort et/ou au moins un élément de liaison destiné à relier d'autres pièces d'une caisse en blanc de véhicule à moteur à la structure intermédiaire (1) étant forgé(s), la structure intermédiaire (1) étant fabriquée à partir d'une pluralité de pièces forgées, **caractérisée en ce que** les pièces étant assemblées les unes avec les autres par soudage.

2. Structure intermédiaire (1) selon la revendication 1, **caractérisée en ce que** la structure intermédiaire (1) comprend un métal léger ou un alliage de métal léger, en particulier l'aluminium, le magnésium ou un alliage d'aluminium ou de magnésium, en particulier de préférence un alliage AIMgSi, de préférence est constituée d'un de ces matériaux susmentionnés.

3. Procédé de fabrication d'une structure intermédiaire (1) selon l'une quelconque des revendications 1 à 2, pour une porte de véhicule à moteur, en particulier pour une porte latérale d'un véhicule à moteur, **caractérisée en ce que** la structure intermédiaire est fabriquée au moins à certains endroits à partir d'une ébauche en métal léger par forgeage, la structure intermédiaire (1) étant assemblée à partir d'une pluralité de pièces forgées, au moins une pièce étant fabriquée à partir d'une ébauche en métal léger par forgeage, les pièces étant assemblées les unes avec les autres par soudage.

4. Procédé selon la revendication 3 **caractérisé en ce qu'**une ébauche en métal léger est utilisée qui comprend un métal léger ou un alliage de métal léger en particulier de l'aluminium ou un alliage d'aluminium, du magnésium ou un alliage de magnésium, en particulier de préférence un alliage d'AIMgSi, de préférence est constituée d'un de ces matériaux susmentionnés.

5. Procédé selon l'une quelconque des revendications 3 à 4, **caractérisé en ce qu'**au moins un élément de renfort et/ou au moins un élément de liaison destiné à raccorder d'autres pièces d'une structure de caisse en blanc de véhicule à moteur sont forgées sur la structure intermédiaire (1), sont forgées pour se fixer sur la structure intermédiaire (1) et/ou forgées d'un seul tenant dans cette dernière.
